# EUROPÄISCHE PATENTANMELDUNG

(11) **EP 1 780 868 A1**
(43) Veröffentlichungstag der Anmeldung: **02.05.2007**
(21) Anmeldenummer: 06020070.6
(22) Anmeldetag: 26.09.2006
(51) Int. Cl.: H02K 1/14

(54) **Stator einer E-Maschine**

(30) Priorität: 27.10.2005 DE 102005051380
(71) Anmelder: ZF FRIEDRICHSHAFEN AG, 88038 Friedrichshafen (DE)
(72) Erfinder: Ketteler, Karl-Hermann, 88677 Markdorf (DE)

(57) **Zusammenfassung**

Die Erfindung betrifft einen Stator (1) für eine elektrische Maschine, insbesondere eine Drehstrommaschine für Kraftfahrzeuge, welcher aus einem Wicklungsträger (2) besteht, der Nuten (3) und Zähne (4) aufweist. In den Nuten sind dabei Wicklungen (5) angeordnet. Erfindungsgemäß besteht der Wicklungsträger (2) aus mehreren gleichartigen Segmenten (6), welche nach ihrer Umwicklung kreisringförmig umgeformt werden. Die Segmente werden dann vorteilhafter Weise in ein zylinderförmiges Gehäuse (9)eingebracht und bilden mit den Wicklungen (5) einen zylinderförmigen Stator (1) bilden.

## Beschreibung

Die Erfindung betrifft einen Stator einer elektrischen Maschine entsprechend dem Oberbegriff des Anspruchs 1 sowie einem Verfahren zur Herstellung eines solchen Stators entsprechend dem Oberbegriff des Anspruchs 7.

Aus der DE 10 2004 001 842 A1 ist ein Stator mit einem Wicklungsträger bekannt, welcher eine Vielzahl an Nuten und Zähnen aufweist. In diese Nuten werden mehrere Wicklungsstränge eingelegt. Um die Wicklungsstränge einlegen zu können, sind diese so vorgewickelt, dass sie problemlos über die Zähne geführt werden können.

Aus der DE 103 61 670 A1 ist ein Stator mit einem Wicklungsträger bekannt, wobei mehrere vorgewickelte Wicklungsstränge in den anfangs flachen Wicklungsträger eingelegt werden. Der Wicklungsträger wird dann ringförmig gebogen um mit den Wicklungen einen zylinderförmigen Stator zu bilden.

Damit die vorgewickelten Wicklungsstränge in die Nuten eingelegte werden können, müssen sie mit einem gewissen Spiel über die Zähne passen. Dadurch ergeben sich Wicklungsköpfe, die in axialer Richtung weit über den Stator hinausragen. Somit wird der axiale Bauraum, der für den Stator benötigt wird vergrößert. Weiterhin überlappen sich die Wicklungsstränge in den bekannten Ausführungen in radialer Richtung. Dadurch wird auch der radiale Bauraum des Stators unvorteilhaft vergrößert.

Der vorliegenden Erfindung liegt die Aufgabe zugrunde, einen Stator zu ermöglichen, welcher einen geringen axialen und radialen Bauraum besitzt und weiterhin ein Verfahren zu entwickeln, mit dem ein solcher Stator besonders einfach und kostengünstig gefertigt werden kann.

Diese Aufgabe wird mit einem Stator entsprechend den kennzeichnenden Merkmalen des Hauptanspruchs sowie einem Verfahren entsprechend den kennzeichnenden Merkmalen des Anspruchs 7 gelöst.

Erfindungsgemäß besteht der Stator aus einem Wicklungsträger, welcher Zähne und Nuten aufweist. Weiterhin sind in den Nuten Wicklungen angeordnet. Der Wicklungsträger besteht dabei aus einer Vielzahl an gleichartigen Segmenten, welche jeweils mindestens zwei Zähne besitzen, welche einzeln mit den Wicklungen umwickelt sind. Die einzelnen Segmente sind so aneinander befestigt, dass sie mit den Wicklungen einen zylinderförmigen Stator bilden. Der Stator ist vorteilhafte Weise in einem Gehäuse angeordnet.

Die Wicklungen der einzelnen Segmente sind miteinander elektrisch verbunden. Dabei sind die Verbindungen vorteilhafter Weise in den Nuten des Wicklungsträgers angeordnet. Dadurch entstehen keine Überkreuzungen der Windungen in den Wicklungsköpfen, wodurch die Wicklungsköpfe kleiner als bekannte Ausführungen bleiben können. Die Wicklungen der einzelnen Segmente können dabei parallel oder vorzugsweise in Serie geschaltet werden.

Die magnetischen Eigenschaften des Stators können durch die Anzahl der Windungen der einzelnen Wicklungen beeinflusst werden. Deswegen kann die Anzahl an Windungen der einzelnen Wicklungen gleich sein oder sich unterscheiden. Ebenso kann der Drehsinn der einzelnen Wicklungen eines Segments gleich oder unterschiedlich sein.

Der Stator besitzt Segmente mit mehr als einem Zahn. Eine vorteilhafte Ausgestaltung besitzt einen Stator, dessen einzelne Segmente drei Zähne besitzen. Die Wicklungen der Segmente können in Reihe, parallel oder auch gemischt, also teilweise in Reihe und teilweise parallel, miteinander verbunden sein.

Die Segmente einer Phase können in Sternform oder in Dreieckform, also ringförmig aneinandergereiht, angeordnet sein.

Die einzelnen Segmente sind erfindungsgemäß vor dem Umwickeln flach ausgestaltet. Das heisst, dass die Rückseite der Segmente eben ist und die Zähne vorteilhafter Weise parallel ausgerichtet sind. Da die Form aller Segmente gleich ist, können sie maschinell in großer Zahl und besonders einfach und kostengünstig umwickelt werden. Nach der Umwicklung werden die Segmente kreisringförmig umgeformt, wobei sich dabei die Zähne auf der Innenseite des Kreissegmentes befinden. Daraus ergibt sich ein weiterer Vorteil. Da sich durch die Umformung der Raum in den Nuten verringert, werden die Windungen, die sich darin befinden zusammengepresst. Dadurch wird eine Füllung der Nut mit Windungen ermöglicht, die durch eine normale Umwicklung nicht erreicht werden kann. Durch eine hohe Nutfüllung wird die Leistungsdichte der Maschine direkt erhöht, sie wirkt also leistungssteigernd. Um einen Stator zu erhalten wird die gewünschte Anzahl an Segmenten kreisringförmig angeordnet und miteinander verbunden, wodurch sich ein zylinderförmiger Wicklungsträger ergibt. Dieser Wicklungsträger wird vorteilhafter Weise in ein zylinderförmiges Gehäuse eingebracht, damit der Stator an Stabilität gewinnt.

Ferner ist es möglich, den fertig geformten, zylinderförmigen Stator mittels Vergussmasse weiter zu stabilisieren.

Zur weiteren Verdeutlichung der Erfindung sowie dessen Ausführungsformen ist der Beschreibung eine Zeichnung beigefügt. In dieser zeigt:
- Fig. 1: Aufbau eines Stators;
- Fig. 2: Aufbau eines Segmentes;
- Fig. 3: umwickeltes und umgeformtes Segment,
- Fig. 4: schematische Darstellung der Umwicklung eines Segmentes und
- Fig. 5: Darstellung der Anordnung der Segmente und
- bis 7: Wicklungen.

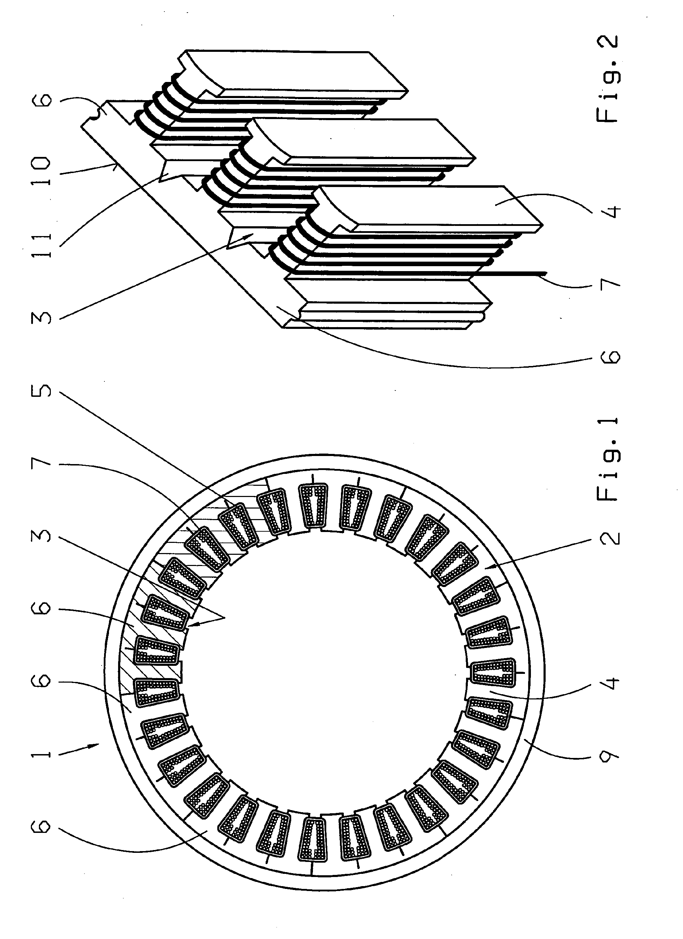

Fig. 1 zeigt einen erfindungsgemäßen Stator 1. Der Wicklungsträger 2 besteht aus neun gleichförmigen Segmenten 6. Jedes Segment 6 besitzt drei Zähne 4 sowie entsprechende Nuten 3 zwischen den Zähnen 4. In den Nuten 3 sind die Wicklungen 5 mit ihren Windungen 7 zu erkennen. Der besseren Darstellung halber sind nur eine geringe Anzahl an Windungen 7 dargestellt, welche durch die Umformung nicht zusammengepresst wurden. Der Stator 1 entspricht einem Stator für einen Drehstromgenerator mit drei Phasen dar. Dafür sind jeweils drei Segmente 6 in Art einer Stemschaltung elektrisch verbunden. Die Segmente 6 der verschiedenen Phasen sind dabei direkt nebeneinander angeordnet, sodass in Umfangsrichtung jedes dritte Segment 6 zu einer Phase des Stators 1 gehört. Um die Segmente 6 des Wicklungsträgers 2 ist ein Gehäuse 9 angebracht, um die Stabilität des Stators 1 zu erhöhen.

Fig. 2 zeigt ein Segment 6, bevor es umgeformt wird. Zu erkennen ist die flache Rückseite 10 des Segments, die parallelen Zähne 4 und die Windungen 7, welche um die Zähne 4 gewickelt sind. Auf dem Grund der Nut sind keilförmige Vertiefungen 11 zu erkennen, welche eine Umformung des Segments 6 erleichtern.

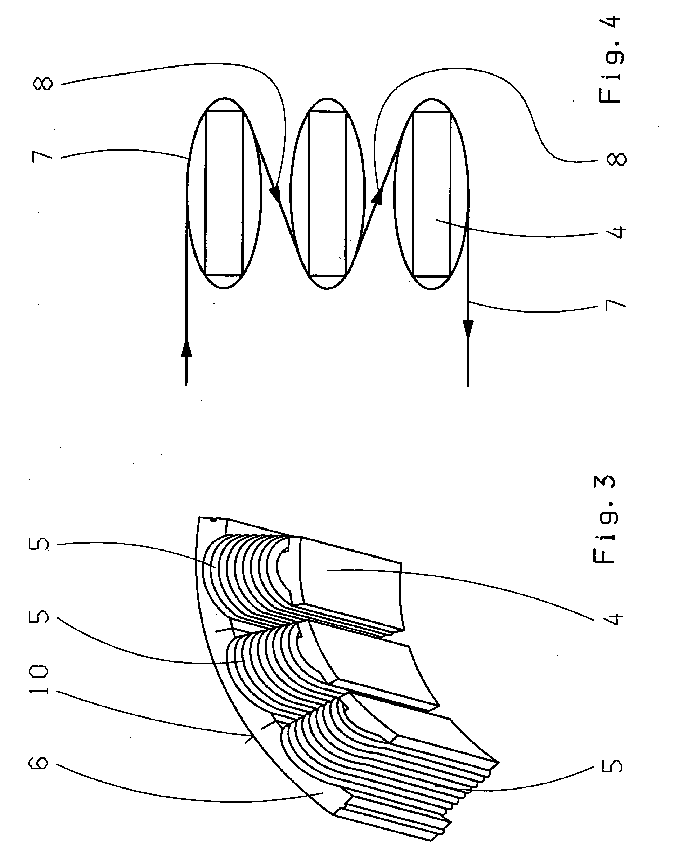

Fig. 3 zeigt einen vollständig umwickelten Segments 6, welches nach der Umwicklung umgeformt wurde. Die Wicklungen 5 sind um die Zähne 4 gewickelt und wurden durch die Umformung des Segments 6 zusammengepresst. Die Rückseite 10 des Segments 6 ist kreisringförmig umgeformt und die Zähne 4 liegen auf der radial inneren Seite des Kreisringsegments.

Fig. 4 zeigt die Art, in welcher die Windungen 7 um die Zähne 4 gewunden werden. Man erkennt, dass sich der Drehsinn zweier benachbarter Zähne 4 abwechselt. Ausserdem sind die Abschnitte der Windungen 7 dargestellt, welche die Verbindungen 8, mit der die einzelnen Wicklungen 5 miteinander verbunden sind, darstellen. Diese Verbindungen 8 sind vorteilhafter Weise in den Nuten 3 angeordnet.

Fig. 5 zeigt drei Segmente mit jeweils drei Wicklungen, wobei die einzelnen Wicklungen 5 eines Segments 6 in Reihe miteinander verbunden sind. Die Segmente 6 wiederum sind in Sternform angeordnet.

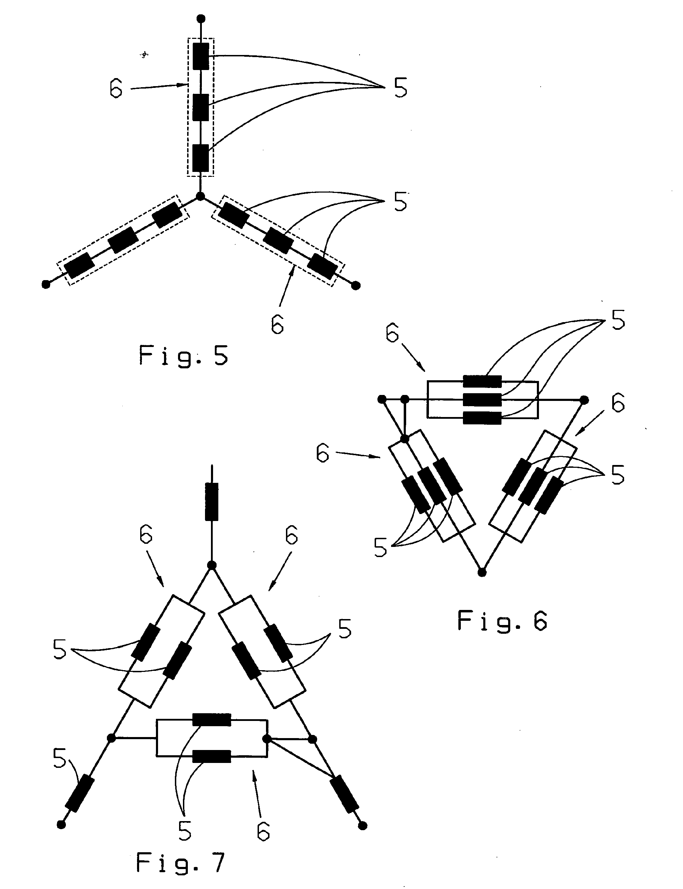

Fig. 6 zeigt drei Segmente mit jeweils drei Wicklungen, wobei die einzelnen Wicklungen 5 eines Segments 6 parallel miteinander verbunden sind. Die Segmente sind in Ringform angeordnet.

Fig. 7 zeigt eine gemischte Anordnung, bei welcher die Wicklungen 5 eines Segments 6 teilweise parallel, teilweise in Reihe miteinander verbunden sind. Die Segmente 6 sind teilweise in Stern- und teilweise in Ringform angeordnet.

### Bezugszeichen

- 1: Stator
- 2: Wicklungsträger
- 3: Nut
- 4: Zahn
- 5: Wicklung
- 6: Segment
- 7: Windung
- 8: Verbindung
- 9: Gehäuse
- 10: Rückseite eines Segments
- 11: Vertiefung

## Patentansprüche

1. Stator (1) für eine elektrische Maschine, insbesondere eine Drehstrommaschine für Kraftfahrzeuge, bestehend aus einem Wicklungsträger (2), welcher Nuten (3) und Zähne (4) aufweist und Wicklungen (5), welche in den Nuten (3) angeordnet sind, **dadurch gekennzeichnet , dass** der Wicklungsträger (2) aus mehreren gleichartigen Segmenten (6) besteht, wobei jedes Segment (6) mehrere Zähne (4) besitzt und um jeden Zahn (4) Windungen (7) einer Wicklung (5) angebracht ist und die einzelnen Segment (6) kreisringförmig aneinander befestigt sind und einen zylinderförmigen Stator (1) bilden.

2. Stator nach einem der vorherigen Ansprüche, **dadurch gekennzeichnet, dass** die Wicklungen (5) eines Segments (6) miteinander elektrisch verbunden sind, wobei die Verbindungen (8) in den Nuten (3) ausgeführt sind.

3. Stator nach einem der vorherigen Ansprüche, **dadurch gekennzeichnet, dass** die Wicklungen (5) eines Segments (6) in Reihe geschaltet sind.

4. Stator nach einem der vorherigen Ansprüche, **dadurch gekennzeichnet, dass** die Wicklungen (5) eines Segments (6) eine gleiche oder unterschiedliche Zahl an Windungen (7) besitzen.

5. Stator nach einem der vorherigen Ansprüche, **dadurch gekennzeichnet, dass** sich der Drehsinn der Wicklungen (5) eines Segments (6) von Zahn (4) zu Zahn (4) ändert oder gleich ist.

6. Stator nach einem der vorherigen Ansprüche, **dadurch gekennzeichnet, dass** jedes Segment (6) vorzugsweise mehr als einen Zahn (4) besitzt und die Segmente (6) einer Phase in Reihe oder parallel miteinander verbunden sind.

7. Stator nach einem der vorherigen Ansprüche, **dadurch gekennzeichnet, dass** die Segmente in Sternform oder in Ringform oder teilweise in Sternform und teilweise in Ringform angeordnet sind.

8. Verfahren zur Herstellung eines Stators entsprechend eines der vorhergehenden Ansprüche, **dadurch gekennzeichnet , dass** die Segmente (6) vor der Umwicklung flach, mit parallelen Zähnen (4) ausgebildet sind, die Zähne (4) einzeln umwickelt werden und die Segmente (6) nach der Umwicklung so umgeformt und miteinander verbunden werden, dass sich aus einer Vielzahl an Segmenten (6) ein zylinderförmiger Wicklungsträger (2) bildet, bei welchem die Zähne (4) auf der radial inneren Seite angeordnet sind.

9. Verfahren nach Anspruch 8, **dadurch gekennzeichnet , dass** die Zähne (4) mit so vielen Windungen (7) umwickelt werden, dass die Windungen (5) durch die Umformung der Segmente (6) in den Nuten (3) zusammengepresst werden.

10. Verfahren nach Anspruch 8 oder 9, **dadurch gekennzeichnet, dass** der zylinderförmige Wicklungsträger (2) in ein zylinderförmiges Gehäuse (9) eingebracht wird.
